(19) Europäisches Patentamt
European Patent Office
Office européen des brevets

(11) **EP 2 054 268 B1**

(12) **EUROPÄISCHE PATENTSCHRIFT**

(45) Veröffentlichungstag und Bekanntmachung des Hinweises auf die Patenterteilung:
**14.09.2011 Patentblatt 2011/37**

(21) Anmeldenummer: **07818717.6**

(22) Anmeldetag: **05.10.2007**

(51) Int Cl.:
***B60Q 1/10*** *(2006.01)*       ***B60Q 1/12*** *(2006.01)*

(86) Internationale Anmeldenummer:
**PCT/EP2007/008640**

(87) Internationale Veröffentlichungsnummer:
**WO 2008/046523 (24.04.2008 Gazette 2008/17)**

(54) **KRAFTFAHRZEUGSCHEINWERFER**

MOTOR VEHICLE HEADLIGHT

PHARE POUR VÉHICULE AUTOMOBILE

(84) Benannte Vertragsstaaten:
**DE FR GB**

(30) Priorität: **19.10.2006 DE 102006049302**

(43) Veröffentlichungstag der Anmeldung:
**06.05.2009 Patentblatt 2009/19**

(73) Patentinhaber: **Bayerische Motoren Werke Aktiengesellschaft**
**80809 München (DE)**

(72) Erfinder:
• **ERDL, Helmut**
**83569 Vogtareuth (DE)**
• **ENDERS, Martin**
**82041 Deisenhofen (DE)**
• **RIPPERGER, Joachim**
**85774 Unterföhring (DE)**
• **KUHL, Patrick**
**81371 München (DE)**

(74) Vertreter: **Mayer-Martin, Christian**
**Bayerische Motorenwerke AG**
**Patentabteilung AJ-3**
**D-80788 München (DE)**

(56) Entgegenhaltungen:
EP-A- 1 323 570       EP-A- 1 378 396
EP-A- 1 666 304       JP-A- 2004 063 166
JP-A- 2005 059 662    US-A1- 2006 109 672

**EP 2 054 268 B1**

**Beschreibung**

Die Erfindung betrifft einen Kraftfahrzeugscheinwerfer mit einer Basis-Lichtquelle und einer Infrarot-Strahlquelle,

Die rasante technologische Entwicklung auf dem Gebiet der Kraftfahrzeugbeleuchtungstechnik führte in den letzten Jahren zur Integration einer zunehmenden Anzahl von Funktionalitäten in einen Kraftfahrzeugscheinwerfer. JP 2005 05 9662, EP 1666304, US 2006/0109672 und EP 1378396 offenbaren Beispiele von Entwicklungen auf diesem gebiet.

So sind bereits Kraftfahrzeugscheinwerfer bekannt, welche Infrarotstrahlung abstrahlen, um diese im Rahmen eines kamerabasierten Fahrerassistenzsystems bei Dunkelheit, insbesondere für ein aktives Nachtsichtsystem, zu nützen. Dabei wird von Objekten oder Passanten reflektierte Infrarotstrahlung durch eine Sensoreinrichtung erfasst, in Bilder der Objekte oder Passanten umgesetzt, und diese auf einer Anzeigeeinrichtung dargestellt.

Zudem sind Kraftfahrzeugscheinwerfer bekannt, welche zur Anpassung an eine kurvige Straßenführung oder im Rahmen einer Leuchtweitenregulierung verschwenkbar oder teilweise verschwenkbar ausgeführt sind. Dazu verfügen die Kraftfahrscheinwerfer über ein oder zwei Motoren, mit denen die optische Scheinwerferachse verstellt werden kann, um eine Kurvenlichtfunktion und/oder eine Leuchtweitenregulierung zu verwirklichen.

Üblicherweise besitzt die Strahlverteilung der Infrarotstrahlung einen Bereich hoher Strahlstärken im Zentrum der Strahlverteilung und einen Bereich geringer Strahlstärken am Rand der Strahlverteilung. Dazwischen liegt der Bereich mittlerer Strahlstärken. Die Strahlverteilung der Infrarotstrahlquelle ist weitgehend starr. Das bedeutet, dass sie sich üblicherweise weder in vertikaler Richtung (Leuchtweitenregulierung) noch in horizontaler Richtung (Kurvenlichtfunktion) bewegen lässt.

Die Charakteristik der Strahlverteilung sowie ihre Unbeweglichkeit bedeuten, dass ein Nachtsichtsystem nur dann über eine hohe Reichweite verfügt, wenn sich das Fahrzeug auf einer geraden Straße und in seiner Konstruktionslage (kein Nickwinkel durch Beladung o. ä.) befindet.

In horizontalen Kurven, auf Kuppen oder in Wannen sowie bei einem veränderten Nickwinkel der Fahrzeugkarosserie (z.B. bei Brems- oder Beschleunigungsmanövern oder bei Beladung) sinkt die Reichweite des Nachtsichtsystems, da das Zentrum der Strahlverteilung nicht mehr auf den relevanten Bereich auf der Straße ausgerichtet ist. Zwar lassen sich diese nachteiligen Effekte durch eine Strahlverteilung verringern, deren Bereich hoher Strahlstärken sowohl vertikal, als auch horizontal ausgebreitet ist. Jedoch benötigt eine solche Strahlverteilung eine hohe Strahlleistung der Infrarotstrahlquelle. Diese benötigt wiederum eine hohe elektrische Leistung und bewirkt eine große thermische Verlustleistung, die insbesondere bei Halbleiterstrahlern durch aufwändige Kühlmaßnahmen abgeführt werden muss.

Der Erfindung liegt nun die Aufgabe zu Grunde, einen Kraftfahrzeugscheinwerfer anzugeben, der flexibel und wirtschaftlich einsetzbar ist.

Diese Aufgabe wird durch die Merkmale des unabhängigen Anspruchs gelöst. Vorteilhafte Weiterbildungen der Erfindung sind den abhängigen Ansprüchen zu entnehmen.

Die Erfindung basiert demnach auf dem Gedanken, einen Kraftfahrzeugscheinwerfer mit einer Basis-Lichtquelle und einer Infrarot-Strahlquelle auszustatten, wobei die Basis-Lichtquelle um einen Basis-Schwenkwinkel schwenkbar ausgeführt ist, und wobei die Infrarot-Strahlquelle um einen vom Basis-Schwenkwinkel verschiedenen Infrarot-Schwenkwinkel schwenkbar ausgeführt ist.

Dadurch wird erreicht, dass die Basis-Lichtquelle je nach Fahrsituation um einen die Abstrahlcharakteristik der Basis-Lichtquelle berücksichtigenden Basis-Schwenkwinkel geschwenkt werden kann, und die Infrarot-Strahlquelle je nach Fahrsituation um einen die Abstrahlcharakteristik der Infrarot-Strahlquelle berücksichtigenden Infrarot-Schwenkwinkel geschwenkt werden kann.

Die Infrarot-Strahlquelle und/oder die Basis-Lichtquelle können dabei jeweils einen Reflektor und/oder ein Gehäuse umfassen. Ein Schwenkwinkel beschreibt dabei beispielsweise die Abweichung der Hauptabstrahlrichtung oder der Schwerpunkts-Abstrahlrichtung der Infrarot-Strahlquelle bzw. der Basis-Lichtquelle von der Fahrzeuglängsachse.

Erfindungsgemäß umfasst der Kraftfahrzeugscheinwerfer eine Basis-Lichtquelle und eine Schwenkeinrichtung, die zum horizontalen und/oder vertikalen Schwenken der Basis-Lichtquelle um einen Basis-Schwenkwinkel eingerichtet ist. Eine Infrarot-Strahlquelle ist mit der Schwenkeinrichtung derart gekoppelt, dass die Infrarot-Strahlquelle bei einem Schwenken der Basis-Lichtquelle durch die Schwenkeinrichtung um einen Basis-Schwenkwinkel durch die Schwenkeinrichtung um einen vom Basis-Schwenkwinkel abweichenden Infrarot-Schwenkwinkel horizontal und/oder vertikal geschwenkt wird. Diese Formulierung umfasst selbstverständlich auch den ebenfalls von der Erfindung umfassten Fall, dass eine Basis-Lichtquelle mit der Schwenkeinrichtung einer Infrarot-Strahlquelle derart gekoppelt ist, dass die Basis-Lichtquelle bei einem Schwenken der Infrarot-Strahlquelle durch die Schwenkeinrichtung um einen Infrarot-Schwenkwinkel durch die Schwenkeinrichtung um einen vom Infrarot -Schwenkwinkel abweichenden Basis-Schwenkwinkel horizontal und/oder vertikal geschwenkt wird.

Dadurch wird erreicht, dass mit nur eine Schwenkeinrichtung automatisch sowohl die Abstrahlrichtung der Basis-Lichtquelle als auch die Abstrahlrichtung der Infrarot-Strahlquelle geändert werden kann, und zwar entsprechend der verschiedenen Zielbereiche unterschiedlich, und jeweils unter Berücksichtigung der verschiedenen Abstrahlcharakteristiken der Basis-Lichtquelle und der Infrarot-Strahlquelle. Zudem erfordert ein solcher Kraftfahrzeugscheinwerfer nur wenig Bauraum.

Die Kopplung der Schwenkeinrichtung mit der Infrarot-Strahlquelle bzw. der Basis-Lichtquelle ist vorzugsweise mechanisch ausgeführt und basiert insbesondere auf einer Winkel-Umsetzeinrichtung oder einer Winkel-Übersetzungseinrichtung, die den Basis-Schwenkwinkel in einen Infrarot-Schwenkwinkel umsetzt oder umgekehrt. Dazu umfasst die Winkel-Umsetzeinrichtung vorzugsweise einen geeigneten Zahnrad-, Getriebe-, Ketten- und/oder Stangenmechanismus.

Vorzugsweise umfasst der Kraftfahrzeugscheinwerfer nur einen Motor, und/oder ist die Schwenkeinrichtung mit nur einem Motor derart gekoppelt, dass mit nur einem Motor zwei verschiedene Schwenkwinkel (Basis-Schwenkwinkel und Infrarot-Schwenkwinkel) eingestellt werden können.

Besonders bevorzugt wirkt ein Motor auf die Schwenkeinrichtung zum Schwenken der Basis-Lichtquelle, insbesondere auf eine schwenkbare Trägereinrichtung zum Tragen der Basis-Lichtquelle, und wirkt der Motor oder die Schwenkeinrichtung zum Schwenken der Basis-Lichtquelle auf die Winkel-Umsetzeinrichtung, welche ihrerseits auf eine Schwenkeinrichtung zum Schwenken der Infrarot-Strahlquelle, insbesondere auf eine schwenkbare Trägereinrichtung zum Tragen der Infrarot-Strahlquelle, wirkt.

Alternativ dazu wirkt ein Motor auf die Schwenkeinrichtung zum Schwenken der Infrarot-Strahlquelle, insbesondere auf eine schwenkbare Trägereinrichtung zum Tragen der Infrarot-Strahlquelle, und wirkt der Motor oder die Schwenkeinrichtung zum Schwenken der Infrarot-Strahlquelle auf die Winkel-Umsetzeinrichtung, welche ihrerseits auf eine Schwenkeinrichtung zum Schwenken der Basis-Lichtquelle, insbesondere auf eine schwenkbare Trägereinrichtung zum Tragen der Basis-Lichtquelle, wirkt.

Die Schwenkeinrichtung kann je nach Ausführungsvariante eine oder mehrere der folgenden Komponenten umfassen: Motor, Trägereinrichtung der Basis-Lichtquelle und/oder Winkel-Umsetzeinrichtung.

Vorzugsweise ist die Schwenkeinrichtung derart mit der Basis-Lichtquelle und der Infrarot-Strahlquelle gekoppelt, dass der horizontale und/oder vertikale Infrarot-Schwenkwinkel $\alpha_{IR}$ und/oder $\beta_{IR}$ mit dem horizontalen und/oder vertikalen Basis-Schwenkwinkel $\alpha_{ABL,FL}$ und/oder $\beta_{ABC,FL}$ korreliert, oder dass der horizontale und/oder vertikale Infrarot-Schwenkwinkel $\alpha_{IR}$ und/oder $\beta_{IR}$ vom horizontalen und/oder vertikalen Basis-Schwenkwinkel $\alpha_{ABL,FL}$ und/oder $\beta_{ABL,FL}$ abhängt:

$$\beta_{IR} = f\!\left(\alpha_{ABL,FL}, \beta_{ABL,FL}\right);$$

Vorzugsweise gilt dabei, dass zwischen dem horizontalen Basis-Schwenkwinkel $\alpha_{ABL,FL}$ und dem horizontalen Infrarot-Schwenkwinkel $\alpha_{IR}$ ein linearer Zusammenhang gilt:

$$\alpha_{IR} = n * \alpha_{ABL,FL} \; ;$$

Vorzugsweise gilt dieser Zusammenhang nur in einem vorgegebenen Wertebereich des horizontalen Basis-Schwenkwinkels $\alpha_{ABL,FL}$.

Der angewendete Proportionalitätsfaktor n kann dabei je nach Wert des horizontalen Basis-Schwenkwinkel $\alpha_{ABL,FL}$ variieren. Vorzugsweise ist in vorgegebenen Wertebereichen des horizontalen Basis-Schwenkwinkels $\alpha_{ABL,FL}$ der Proportionalitätsfaktor n = 1.

Besonders bevorzugt ist der horizontale Infrarot-Schwenkwinkel $\alpha_{IR}$ gleich einem festen maximalen Grenzwinkel, falls der horizontale Basis-Schwenkwinkel $\alpha_{ABL,FL}$ einen vorgegebenen Grenzwert überschreitet.

Bei der Basis-Lichtquelle als Abblendlicht wird beispielsweise davon ausgegangen, dass Objekte in Entfernungen von ca. 60m zum Fahrzeug erkannt werden. Der Schwenkwinkel der Basis-Lichtquelle wird daher, derart eingestellt, dass die Mitte der Lichtverteilung der Basis-Lichtquelle in etwa 60m Entfernung in einer Kurve auf der Mitte der eigenen Fahrbahn liegt.

Mit Hilfe der Infrarot-Strahlquelle als Bestandteil eines Nachtsichtsystems sollen Objekte in größeren Entfernungen bis ca. 150m erkannt werden. Daher wird der Infrarot-Schwenkwinkel der Infrarot-Strahlquelle in Kurven vorzugsweise auf einen größeren Wert als der Basis-Schwenkwinkel der Basis-Lichtquelle gesetzt, damit das Zentrum der Infrarot-Strahlungsverteilung in dieser Entfernung mit hoher Wahrscheinlichkeit auf der Mitte der eigenen Fahrbahn liegt.

Beim Einsatz eines vorausschauenden Sensorsystems, das beispielsweise basierend auf einem Bildsensor oder einem Navigationssystem den vor dem Fahrzeug liegenden Fahrbahnverlauf ermittelt, zur Bestimmung der Schwenkwinkel wird daher zumindest in einem beschränkten Wertebereich des horizontalen Basis-Schwenkwinkels $\alpha_{ABL,FL}$ vorzugsweise n größer 1 gesetzt, insbesondere gleich 2 gesetzt.

Beim Einsatz eines nicht vorausschauenden Sensorsystems, das beispielsweise auf der Fahrdynamikauswertung (Gierrate, Lenkwinkel, Geschwindigkeit) basiert, zur Bestimmung der Schwenkwinkel wird daher zumindest in einem beschränkten Wertebereich des horizontalen Basis-Schwenkwinkels $\alpha_{ABL,FL}$ vorzugsweise n kleiner 1 gesetzt. Dann wird die Infrarot-Strahlquelle nicht so stark geschwenkt, da ansonsten ohne Voraussicht ein zu großer Fehler bei Kurvenänderungen entstehen würde. Vorzugsweise ist n in diesem Fall ½ oder 1/3.

Vorzugsweise wird beim Einsatz einer Kamera mit starrem horizontalen Erfassungsbereich von -X Grad bis +X Grad im Rahmen des Nachtsichtsystems der horizontale Infrarot-Schwenkwinkel $\alpha_{IR}$ auf maximal - X/2 Grad bzw. + X/2 Grad begrenzt. Denn es bringt in diesem Fall keinen Vorteil, die IR-Strahlverteilung weiter als bis zur Hälfte der Erfassungsbereichsgrenzen zu schwenken.

Dadurch wird erreicht, dass die Infrarot-Strahlverteilung nicht immer im gleichen Maße geschwenkt wird, wie die Abblend- bzw. Fernlichtverteilung, oder nicht immer in Abhängigkeit von der Abblend- bzw. Fernlichtverteilung geschwenkt wird. Insbesondere in engen Kurven kann dadurch vermieden werden, dass der starke horizontale Schwenkwinkel der Basis-Lichtquelle dazu führt, dass das Zentrum der Infrarotstrahlverteilung außerhalb des Erfassungsbereichs der Infrarot-Kamera eines Nachtsichtsystems ausgerichtet wird.

Vorzugsweise entspricht der vertikale Infrarot-Schwenkwinkel dem vertikalen Basis-Schwenkwinkel. Allerdings soll auch hier der vertikale Infrarot-Schwenkwinkel vorzugsweise maximal dem halben Erfassungsbereich entsprechen, also auf - X/2 Grad bzw. + X/2 Grad begrenzt sein, wenn der vertikale Erfassungsbereich der Kamera starr zwischen -X Grad und +X Grad liegt.

Durch die Erfindung wird insbesondere erreicht, dass durch die Infrarot-Strahlquelle mit großer Wahrscheinlichkeit der vor dem Fahrzeug liegende Bereich ausgeleuchtet wird, der für den Fahrer in der aktuellen Fahrsituation von Bedeutung ist, und der gegebenenfalls durch die Kamera des Nachtsichtsystems erfasst wird.

Vorzugsweise sind die Basis-Lichtquelle und/oder die Infrarot-Strahlquelle zumindest in bestimmten Betriebsarten oder Fahrsituationen in Abhängigkeit von der Stellung des Lenkrades, der Vorderräder und/oder der Gierrate automatisch in horizontaler Richtung schwenkbar, insbesondere im Rahmen eines automatischen Kurvenlichtsystems.

Die Basis-Lichtquelle und/oder die Infrarot-Strahlquelle sind vorteilhafterweise ergänzend oder alternativ dazu zumindest in bestimmten Betriebsarten oder Fahrsituationen in Abhängigkeit vom Nickwinkel des Kraftfahrzeuges automatisch in vertikaler Richtung schwenkbar, insbesondere im Rahmen einer Leuchtweitenregulierung

Dadurch kann beispielsweise die Basis-Lichtquelle durch entsprechende Verschwenkungen der Trägereinrichtung im Rahmen eines adaptiven Kurvenlichtsystems an die zu befahrende Strecke und im Rahmen einer Leuchtweitenregulierung an den Nickwinkel des Fahrzeuges angepasst werden. Automatisch kann dabei ohne zusätzlichen Steueraufwand und ohne einen zusätzlichen Motor eine Infrarot-Strahlquelle durch eine entsprechende Verschwenkung an die zu befahrende Strecke und an den Nickwinkel des Fahrzeuges angepasst werden.

Nach einer vorteilhaften Weiterbildung der Erfindung ist die Infrarot-Strahlquelle halbleiterbasiert, insbesondere LED (Light Emitting Diode)-basiert oder laserbasiert ausgestaltet, und derart hergerichtet, dass sie Licht bevorzugt im infraroten Wellenlängenspektrum abstrahlt.

Die Basis-Lichtquelle, durch welche insbesondere ein Fernlicht und/oder Abblendlicht realisiert wird, ist vorzugsweise als Halogenlampe, als Gasentladungslampe (z.B. Xenon-Lampe) oder halbleiterbasiert ausgeführt, und derart hergerichtet, dass sie Licht bevorzugt im sichtbaren Wellenlängenspektrum abstrahlt. Besonders bevorzugt ist die Basis-Lichtquelle als Bi-Xenon-Lichtquelle ausgeführt.

Insgesamt wird so ein flexibler Kraftfahrzeugscheinwerfer geschaffen, der bei aktiviertem und deaktiviertem Nachtsichtsystem adaptiv einsetzbar ist und zudem, insbesondere durch die Integration zweier verschiedener Lichtquellen in ein Kraftfahrzeugscheinwerfermodul, ökonomisch herstellbar und in ein Fahrzeug einbaubar ist.

Im Folgenden wird die Erfindung anhand von Beispielen unter Bezugnahme auf die folgende Figur näher erläutert:

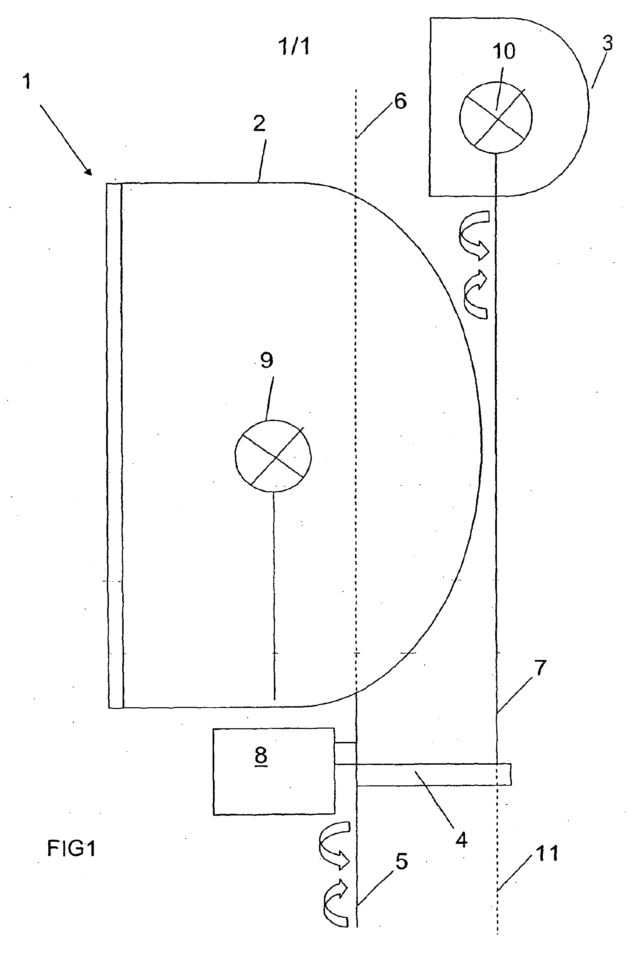

Figur 1     zeigt eine Schnittdarstellung eines Kraftfahrzeugscheinwerfers.

In Figur 1 ist ein Kraftfahrzeugscheinwerfer 1 dargestellt, der eine Basis-Lichtquelle 2 samt Gasentladungslampe 9, Gehäuse und Reflektor umfasst, und der eine Infrarot-Strahlquelle 3 samt mehrerer infrarotemittierende Dioden (IRED) 10, Gehäuse und Reflektor umfasst.

Die Basis-Lichtquelle 2 wird durch eine Trägereinrichtung 5 getragen, und die Infrarot-Strahlquelle 3 wird durch eine Trägereinrichtung 7 getragen.

Die Trägereinrichtung 5 der Basis-Lichtquelle 2 ist im Rahmen eines automatischen Kurvenlichtsystems um die Achse 6 schwenkbar und die Trägereinrichtung 7 der Infrarot-Strahlquelle 3 ist im Rahmen eines automatischen Kurvenlichtsystems um die Achse 11 schwenkbar.

Ein durch ein Steuergerät des Kurvenlichtsystems angesteuerter Elektromotor 8 wirkt derart auf die Trägereinrichtung 5 der Basis-Lichtquelle 2, dass diese fahrsituationsabhängig automatisch um einen Basis-Schwenkwinkel $\alpha_{ABL,FL}$ geschwenkt wird. Über eine Winkel-Umsetzeinrichtung wirkt die Trägereinrichtung 5 der Basis-Lichtquelle 2 derart auf die Trägereinrichtung 7 der Infrarot-Strahlquelle 3, dass diese automatisch um einen Infrarot-Schwenkwinkel $\alpha_{IR}$ geschwenkt wird.

Dabei gilt beispielsweise $\alpha_{IR} = n * \alpha_{ABL,FC}$.

Bei der Verwendung einer starren Kamera mit einem Erfassungsbereich von -X bis X wird vorteilhafterweise folgender Zusammenhang zwischen $\alpha_{IR}$ und $\alpha_{ABL,FL}$ gewählt:

$$a_{IR} = n * a_{ABL,FL}, \text{ wenn } -X/2 < a_{ABL,FL} < X/2$$

$$a_{IR} = -X/2, \text{ wenn } a_{ABL,FL} < -X/2$$

$$a_{IR} = X/2, \text{ wenn } a_{ABL,FL} > X/2$$

Bei der Verwendung einer schwenkbaren Kamera mit einem Erfassungsbereich von -X bis X und einem Schwenkbereich von -Y bis Y wird vorteilhafterweise folgender Zusammenhang zwischen $\alpha_{IR}$ und $\alpha_{ABL,FL}$ gewählt:

$$a_{IR} = n * a_{ABL,FL}, \text{ wenn } -X/2-Y < a_{ABL,FL} < X/2+Y$$

$$a_{IR} = -X/2-Y, \text{ wenn } a_{ABL,FL} < -X/2-Y$$

$$a_{IR} = X/2+Y, \text{ wenn } a_{ABL,FL} > X/2+Y;$$

wobei bei Verwendung einer vorausschauenden Sensorik (z.B. Kamerasensoren, Navigationsdaten, etc.) gelten soll:

$$n >= 1 \text{ (z.B. } n = 2);$$

und wobei bei Verwendung einer nicht vorausschauenden Sensorik (z.B. Fahrzeugdynamikauswertung) gelten soll:

$$n <= 1 \text{ (z.B. } n = \tfrac{1}{2} \text{ oder } n = 1/3).$$

Analog zu dieser Schwenkung der Lichtquellen in horizontaler Richtung sieht eine Ausführungsvariante ergänzend oder alternativ eine Schwenkung in vertikaler Richtung um senkrecht zur Blattebene stehende Achsen, beispielsweise im Rahmen einer automatischen Leuchtweitenregulierung, vor.

**Patentansprüche**

1. Kraftfahrzeugscheinwerfer (1)

   - mit einer Basis-Lichtquelle (2), mit einer Infrarot-Strahlquelle (3)
   - mit einer Schwenkeinrichtung (5), die zum Schwenken der Basis-Lichtquelle (2) um einen Basis-Schwenkwinkel eingerichtet ist, **dadurch** gekennzeichet, daß die Infrarot-Strahlquelle (3) mit der Schwenkeinrichtung (5) derart gekoppelt ist, dass die Infrarot-Strahlquelle (3) bei einem Schwenken der Basis-Lichtquelle (2) durch die Schwenkeinrichtung (5) um einen Basis-Schwenkwinkel durch die Schwenkeinrichtung (5) um einen vom Basis-Schwenkwinkel abweichenden Infrarot-Schwenkwinkel geschwenkt wird, und daß der Kraftfahrzeugscheinwerfer zumindest eine durch die Schwenkeinrichtung (5) schwenkbare Trägereinrichtung (7) aufweist, durch welche die Infrarot-Strahlquelle (3) getragen wird

2.  Kraftfahrzeugscheinwerfer (1) nach Anspruch 1,

    - bei dem der Infrarot-Schwenkwinkel mit dem Basis-Schwenkwinkel korreliert.

3.  Kraftfahrzeugscheinwerfer (1) nach einem der vorhergehenden Ansprüche

    - mit einer Winkel-Umsetzeinrichtung (4), die den Basis-Schwenkwinkel in den Infrarot-Schwenkwinkel umsetzt.

4.  Kraftfahrzeugscheinwerfer (1) nach einem der vorhergehenden Ansprüche, bei dem die Basis-Lichtquelle (2) und/ oder die Infrarot-Strahlquelle (3) in Abhängigkeit von der Stellung des Lenkrades automatisch schwenkbar ist.

5.  Kraftfahrzeugscheinwerfer (1) nach einem der vorhergehenden Ansprüche, bei dem die Basis-Lichtquelle (2) und/ oder die Infrarot-Strahlquelle (3) in Abhängigkeit vom Nickwinkel des Kraftfahrzeuges automatisch schwenkbar ist.


**Claims**

1.  A motor vehicle headlight (1)

    - with a basic light source (2),
    - with an infrared radiation source (3),
    - with a pivoting device (5), which is set up to pivot the basic light source (2) about a basic pivoting angle,

    **characterised in that** the infrared radiation source (3) is coupled to the pivoting device (5) in such a way that the infrared radiation source (3), upon a pivoting of the basic light source (2) by the pivoting device (5) about a basic pivoting angle, is pivoted by the pivoting device (5) about an infrared pivoting angle differing from the basic pivoting angle, and **in that** the motor vehicle headlight has at least one carrier device (7), which can be pivoted by the pivoting device (5) and by which the infrared radiation source (3) is carried.

2.  A motor vehicle headlight (1) according to claim 1

    - wherein the infrared pivoting angle correlates with the basic pivoting angle.

3.  A motor vehicle headlight (1) according to either of the preceding claims

    - with an angle conversion device (4), which converts the basic pivoting angle into the infrared pivoting angle.

4.  A motor vehicle headlight (1) according to any one of the preceding claims, wherein the basic light source (2) and/or the infrared radiation source (3) can be automatically pivoted depending on the position of the steering wheel.

5.  A motor vehicle headlight (1) according to any one of the preceding claims, wherein the basic light source (2) and/or the infrared radiation source (3) can be pivoted automatically depending on the pitch angle of the motor vehicle.


**Revendications**

1.  Projecteur de véhicule automobile (1) comprenant :

    - une source lumineuse de base (2),
    - une source de lumière infrarouge (3),
    - une installation de basculement (5) pour basculer la source lumineuse de base (2) suivant un angle de basculement de base,

**caractérisé en ce que**

- la source de lumière infrarouge (3) est couplée à l'installation de basculement (5) pour que la source de lumière infrarouge (3) soit basculée par le basculement de la source lumineuse de base (2) par l'installation de basculement (5) selon un angle de basculement de base par l'installation de basculement (5) d'un angle de basculement infrarouge différent de l'angle de basculement de base, et
- le phare de véhicule automobile comporte au moins une installation de support (7) qui peut être basculée par l'installation de basculement (5) et qui porte la source de lumière infrarouge (3).

2. Projecteur de véhicule automobile (1) selon la revendication 1,
**caractérisé en ce que**
l'angle de basculement infrarouge est mis en corrélation ave l'angle de basculement de base.

3. Projecteur de véhicule automobile (1) selon l'une des revendications précédentes,
**caractérisé par**
une installation de conversion d'angle (4) qui convertit l'angle de basculement de base en un angle de basculement infrarouge.

4. Projecteur de véhicule automobile (1) selon l'une des revendications précédentes,
**caractérisé en ce que**
la source lumineuse de base (2) et/ou la source de lumière infrarouge (3) sont basculées automatiquement en fonction de la position du volant.

5. Projecteur de véhicule automobile (1) selon l'une des revendications précédentes,
**caractérisé en ce que**
la source lumineuse de base (2) et/ou la source de lumière infrarouge (3) sont basculées automatiquement en fonction de l'angle de tangage du véhicule automobile.

FIG1

**EP 2 054 268 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 2005059662 B
- EP 1666304 A
- US 20060109672 A
- EP 1378396 A